# EUROPEAN PATENT SPECIFICATION

(11) **EP 3 603 464 B1**
(45) Date of publication and mention of the grant of the patent: **14.12.2022**
(21) Application number: 18213901.4
(22) Date of filing: 19.12.2018
(51) Int. Cl.: A47J 36/02

(54) **METHOD OF MANUFACTURING COOKING UTENSIL AND COOKING UTENSIL**
VERFAHREN ZUR HERSTELLUNG VON KOCHGESCHIRR UND KOCHGESCHIRR
PROCÉDÉ DE FABRICATION D'UN USTENSILE DE CUISSON ET USTENSILE DE CUISSON

(30) Priority: 03.08.2018 JP 2018146389
(43) Date of publication of application: 05.02.2020
(73) Proprietor: Nishikimi Chuzo Co., Ltd., Nagoya-Shi Aichi 455-0832 (JP)
(72) Inventor: Nishikimi, Yasuo, Kuwana-gun, Mie 498-0811 (JP)
(74) Representative: Westphal, Mussgnug & Partner Patentanwälte mbB

(56) References cited:
- JP-A- H04 232 204
- JP-A- 2008 154 649
- JP-A- 2010 274 327
- JP-A- 2013 070 751

## Description

### BACKGROUND

The present invention relates to a method of manufacturing a cooking utensil and a cooking utensil. Specifically, the present invention relates to surface treatment for a cooking surface of a cooking utensil such as a Peking pan made of cast iron.

Conventionally, to prevent burning and facilitate cooking, surface treatment is important for a cooking utensil having a cooking surface, such as a Peking pan or a frying pan.

To allow for comfortable cooking with an iron frying pan, the pan is seasoned before use by heating it empty and frying vegetable trimmings in it to form an oil film on the surface of the pan. However, the oil film tends to disappear easily and thus causes the pan to burn. Such burning necessitates repeated care such as empty heating, which is troublesome.

A known fluorine resin coated cooking utensil prevents burning and allows for comfortable cooking even without the above-described seasoning. However, although care such as empty heating is unnecessary for this type of cooking utensil, the surface of the cooking utensil has low oil wettability and hampers uniform oil spreading. The fluorine resin coated cooking utensil thus causes an oil pool below the lower surface of a cooking target, hampering desired uniform browning. Eventually, the coating on the cooking utensil may peel off or deteriorate.

To solve this problem, a pan disclosed in JP 2008 154649 A has a pan body made of soft iron, a nitride layer, and an oxide layer. The nitride layer is formed on the surface of the pan body by gas soft nitriding. The oxide layer is formed on the surface of the nitride layer by oxidation.

Also, a frying pan made of iron disclosed in JP 2013 70751 A has a frying pan body made of iron, a nitride layer, and an oxidation surface layer. The nitride layer is formed on the frying pan body by nitriding. The oxidation surface layer is formed on the nitride layer. Specifically, a slightly uneven surface is formed on the nitride layer through blasting. The uneven surface is then subjected to oxidation to form an oxidation coating. In this manner, the oxidation surface layer having the slightly uneven surface is formed on the nitride layer.

Through such surface nitriding, the cooking utensil is provided with a scratch resistant and high-strength surface that allows for easy formation of an oil film.

Also, although the surface formed by nitriding tends to rust quickly, the oxidation coating formed on this surface provides a rust-resistant frying pan.

However, on the other hand, complicated manufacturing procedures are required.

Accordingly, it is an objective of the present invention to provide a method of manufacturing a cooking utensil in which a surface treatment is performed on a cooking surface to provide high durability and rust resistance by a simple procedure, as well as a cooking utensil that is manufactured by this manufacturing method.

### SUMMARY

In accordance with one aspect of the present disclosure, a method of manufacturing a cooking utensil is provided according to independent claim 1.

In accordance with another aspect of the present disclosure, a cooking utensil is provided according to independent claim 13.

Other aspects and advantages of the present disclosure will become apparent from the following description, taken in conjunction with the accompanying drawings, illustrating exemplary embodiments.

### BRIEF DESCRIPTION OF THE DRAWINGS

The disclosure may be understood by reference to the following description together with the accompanying drawings:
Fig. 1 is a perspective view showing casting molds used in a method of manufacturing a Peking pan according to an embodiment and a Peking pan as a thin cast-iron product cast using the molds;
Fig. 2 is a schematic view showing the configuration of the surface of the cooking surface of the Peking pan of the embodiment.
Fig. 3 is a front view showing the closed molds and heating portions;
Fig. 4 is a flowchart representing the casting step using the molds of the embodiment;
Fig. 5 is a flowchart representing the nitriding step of the embodiment;
Fig. 6 is a plan view showing a manufacturing apparatus of the embodiment;
Fig. 7 is a cross-sectional view showing a melting furnace of the embodiment;
Fig. 8 is a perspective view illustrating a molten-metal pouring step of the embodiment; and
Fig. 9 is a side view showing the molds and a mold clamping device of the embodiment.

### DETAILED DESCRIPTION

The inventor of the present invention has proposed a super-thin frying pan made of spheroidal graphite cast iron formed by atmosphere casting using molds (Japanese Laid-Open Patent Publication No. 2010-274327). The thickness of the frying pan is approximately 1.0 mm. Specifically, the term "thin" herein refers to the thickness of a product that is approximately 5 mm or less. Particularly, a product having a thickness of 2 mm or less is referred to as a "super-thin" product. The optimal thickness of a frying pan or a Chinese pan is 0.3 to 1.5 mm, or, particularly, 1.0 to 1.4 mm. The molds enable mass production of these products with the optimal thickness, which has not been achieved in the industry. Specifically, as long as the product has such a thin section even partially in the cooking surface, the product may include a section having a greater thickness in other sections. For example, if a certain frying pan has a pan body with a thickness of 2 mm or less and a handle with a thickness of 10 to 50 mm, the frying pan is referred to as a "super-thin" frying pan, as described herein.

Compared to conventional casting using sand molds, casting using molds is extremely efficient due to the reusability of the molds.

Specifically, if a super-thin frying pan is manufactured using conventional porous molds such as sand molds, the cooking surface having the unevenness transferred from the molds must be smoothed using a sander after the product is removed from the molds. In other words, the oxide film (the "mill scale") must be temporarily peeled off.

Therefore, conventionally, the product after polishing is subjected to rust-resistant treatment before shipment, as in the case of an iron frying pan. The user thus has to heat the product to a high temperature and fry vegetable trimmings in the product. This produces black rust afterward and the black rust forms an oxide film.

However, in the case of a product made of cast iron formed by mold atmosphere casting, the cavity surface of the mold is transferred to the surface of the product, thus providing extremely improved smoothness for the product. Therefore, in this case, the surface polishing after opening the molds is unnecessary. As a result, the product is completed with a mill scale (black rust: Fe₃O₄) maintained on the cooking surface. In this state, provided is a preferable cooking utensil that requires no seasoning.

As has been described, the "mill scale" is maintained on the cooking surface of the cooking utensil made of cast iron, which is provided by casting. In this state, nitriding is performed on the cooking surface. As has been found by the inventor of the present invention, the cooking utensil with this cooking surface exerts optimal performance as a cooking utensil and, besides, simplifies the manufacturing procedure.

On the other hand, depending on the purpose of the product, the surface of the cooking surface may be machined through polishing, grinding, or cutting, thus exposing a cementite layer and, additionally, the base of the cast iron. Nitriding is then performed on the surface of the cementite layer or the cast-iron base. This optimizes the composition of the nitride that should be produced and the depth of the nitride layer. As a result, a preferable cooking utensil is obtained.

The nitriding herein refers to nitriding in a broad sense, including soft nitriding. The nitride layer includes a compound layer and a diffusion hardening layer.

It is preferable that the casting be performed with molds and be atmosphere casting. However, the casting may include casting using sand molds or porous molds, casting in vacuum or in an inert gas atmosphere, and casting involving air suction and pressing.

Based on the above-described conventional techniques that have been provided by the inventor of the present invention, the present disclosure is accomplished by the inventor of the present invention in order to improve the durability of the mill scale, thus obtaining a maintenance-free cooking utensil.

A method of manufacturing a cooking utensil and a cooking utensil according to an embodiment will now be described, citing an example of a super-thin Chinese pan with a handle (Peking pan) that is made of spheroidal graphite cast iron and has a thickness of 1.4 mm.

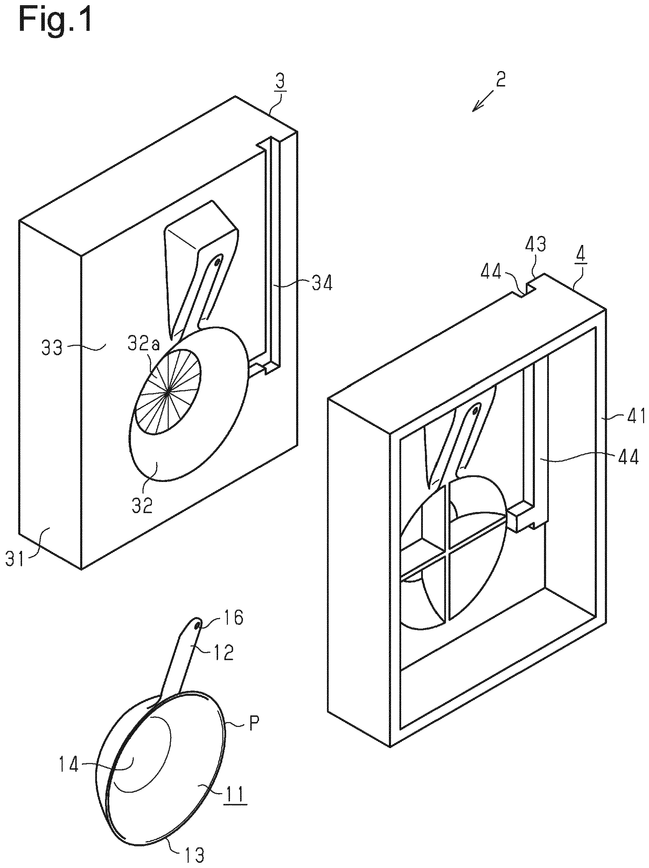

With reference to Fig. 1, a Peking pan P will hereafter be described. The Peking pan P is manufactured by the manufacturing method according to the present embodiment.

### Material and Composition

The Peking pan P of the present embodiment is made of spheroidal graphite cast iron. The spheroidal graphite cast iron will now be described. Cast irons include white cast iron, gray cast iron, CV cast iron, and spheroidal graphite cast iron. Spheroidal graphite cast iron is specified basically according to "JIS G 5502". Spheroidal graphite cast iron is a cast iron that contains spheroidal graphite in the structure. Compared to gray cast iron, spheroidal graphite cast iron has a continuous base and thus exhibits improved toughness. Spheroidal graphite cast iron is thus also referred to as ductile cast iron. To obtain spheroidal graphite cast iron, Fe containing high contents of molten C and Si is inoculated with Mg or Ce. Molten-metal material is thus formed and then inoculated with ferrosilicon (Fe-Si). The molten-metal material is then cooled slowly such that graphite deposits and is spheroidized during solidification. To obtain a certain type of spheroidal graphite cast iron of FCD800 to FCD400 separately from other types, the proportions of perlite and ferrite in the base structure are controlled. Typically, to provide a great amount of perlite, Cu, Sn, Mg, Cr, or Mn, each as a perlite stabilizing element, is added by an appropriate amount. In contrast, to obtain a ferrite base, the contents of the perlite stabilizing elements are minimized while a relatively high content of a graphitizing element, such as Si, is employed. Particularly, by restricting the content of Mn to 0.45% to 0.35% or less, elongation is varied as in FCD400-10 and FCD400-15.

In the present embodiment, toughness, which is resistance to break, is needed more than hardness as a characteristic of a super-thin Peking pan. The Peking pan P thus employs a base mainly containing ferrite.

### Casting Molds

When casting spheroidal graphite cast iron, a rapid temperature drop hampers deposition of spheroidal graphite and forms cementite (Fe₃C). The cast iron is thus whitened and becomes hard but fragile. Such solidification as cementite without deposition of spheroidal graphite is referred to as "chilling". If the material is maintained in a molten state at a high temperature for a long time, the amount of molten Mg decreases due to oxidation or evaporation and thus graphite spheroidization does not occur (referred to as "fading").

Since graphite deposits in spheroidal shapes during solidification, spheroidal graphite cast iron has a relatively great volume, which is a specific characteristic. Therefore, molds must be tolerant to complicated volume variation, as well as original thermal expansion.

Due to problems involved in temperature control and volume variation, as has been described, cooking utensils made of spheroidal graphite cast iron have conventionally been considered to be non-castable unless porous molds are employed. However, the inventor of the present invention has achieved the manufacturing of the cooking utensils made of spheroidal graphite cast iron using metal-mold casting.

As a result, a product immediately after casting is provided as a final product with a mill scale maintained, only with burr removal performed, basically without polishing.

### Shape of Peking Pan P

The shape of the Peking pan P will now be described. As illustrated in Fig. 1, the Peking pan P is a typical Peking pan including a body 11 and a handle 12. The handle 12 is formed integrally with the body 11. The body 11 includes a substantially flat, disk-like inner bottom section 14 and a round-surface-like peripheral section 13. The diameter of the inner bottom section 14 is 13 cm. The peripheral section 13 extends upright from the inner bottom section 14. The handle 12 extends diagonally upward from the body 11. The diameter of the body 11 is approximately 29 cm. The body 11 has uniform thickness. Specifically, the thickness of the inner bottom section 14 and the thickness of the peripheral section 13 are both 1.4 mm and exceptionally small for a Peking pan made of cast iron.

The handle 12 has a base portion and a distal end section on the opposite side to the base portion. The base portion is continuous with the body 11. The handle 12 has a substantially circular cross-sectional shape in the range between the base portion and the distal end section. That is, the handle 12 is shaped like a circular tube in the range between the base portion and the distal end section. The distal end section of the handle 12 is open. The distal end section of the handle 12 is shaped to have an upper section that is slightly projected with respect to a lower section. A stopper hole 16 for storing is formed in the upper section of the distal end section of the handle 12.

### Surface Structure of Peking Pan P

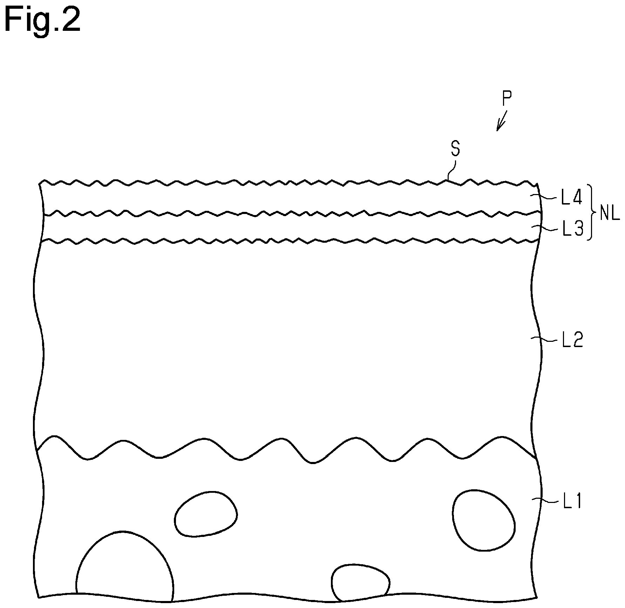

Fig. 2 is a schematic view representing the surface structure of the Peking pan P and does not represent the accurate thickness of each of the layers. Referring to the drawing, an oxide film layer L2 (an oxide film) is arranged on a base portion L1 made of spheroidal graphite cast iron. The oxide film layer L2 is a mill scale (black rust, triiron tetroxide, Fe₃O₄). The mill scale is formed by the atmospheric oxygen bonding with the base portion L1 at a high temperature during casting. In conventional cases using sand molds, the mill scale must be grinded with a sander or the like to be smoothed. In cases of mold casting, the mill scale is used as a cooking surface.

In the present embodiment, the surface of the oxide film layer L2 is subjected also to nitriding. This forms a nitride layer NL on the oxide film layer L2. In the embodiment, the nitride layer NL has a diffusion hardening layer L3 and a compound layer L4. The diffusion hardening layer L3 is located on the oxide film layer L2. The compound layer L4 is located on the diffusion hardening layer L3. The compound layer L4 configures the outermost surface S of the Peking pan P. The compound layer L4 is formed of ε-Fe₂₋₃N, y'-Fe₄N, and Si₃N₄. In the diffusion hardening layer L3, Si₃N₄ deposits by a slight amount. While the content of Si is small in iron or iron steel, the content of Si is great in spheroidal graphite cast iron. Therefore, Si₃N₄ is generated through nitriding. Particularly, Si₃N₄ is also generated in the diffusion hardening layer L3, which is spaced from the surface. This further improves the durability of the Peking pan P.

These nitride compounds all exhibit a high Vickers hardness, thus improving the durability of the Peking pan P.

Also, since the surface of the Peking pan P has a porous structure, the surface readily allows for formation of an oil film as a cooking surface.

In addition, the base portion L1, the oxide film layer L2, the diffusion hardening layer L3, and the compound layer L4 are integrated with one another and do not peel off from one another.

The thickness of the oxide film layer L2 (the oxide film) is several tens of micrometers. The oxide film layer L2 thus blocks oxygen and effectively suppresses generation of red rust (ferric oxide: Fe₂O₃) in the base portion L1. Specifically, the thickness of the oxide film may be several micrometers to several millimeters.

### Manufacturing Apparatus

Next, a manufacturing apparatus 1 for the Peking pan P of the present embodiment will be described.

### Configuration of Mold

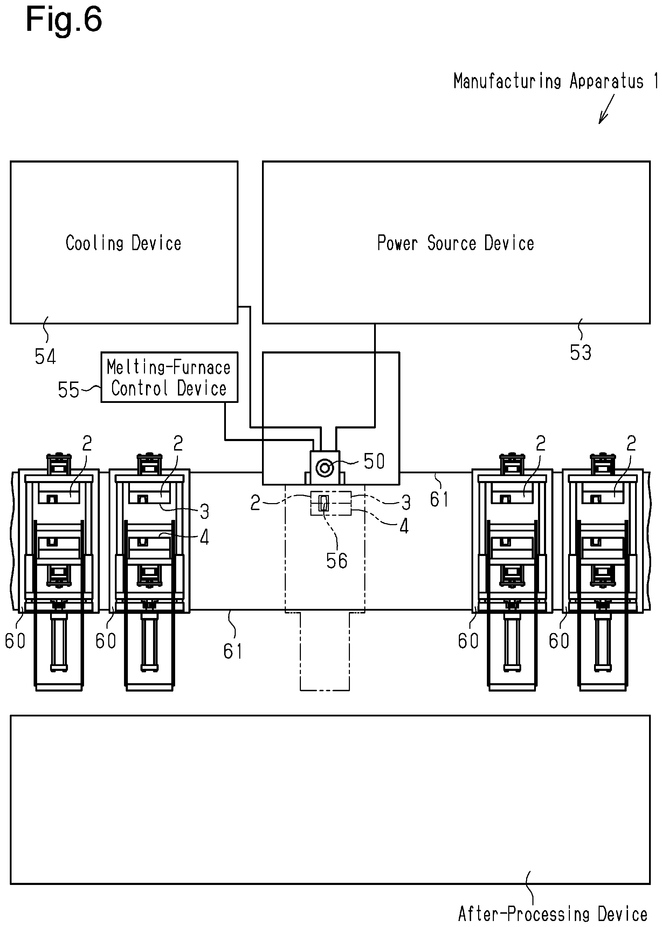

As shown in Figs. 1 and 6, the manufacturing apparatus 1 includes multiple mold sets 2. Each of the mold sets 2 is configured for atmosphere casting (gravity casting). Each mold set 2 thus basically does not need equipment for pressing or drawing molten metal. The mold sets 2 each include a fixed mold 3 and a movable mold 4. The fixed mold 3 and the movable mold 4 are separate from each other by means of vertical separating surfaces 33, 43.

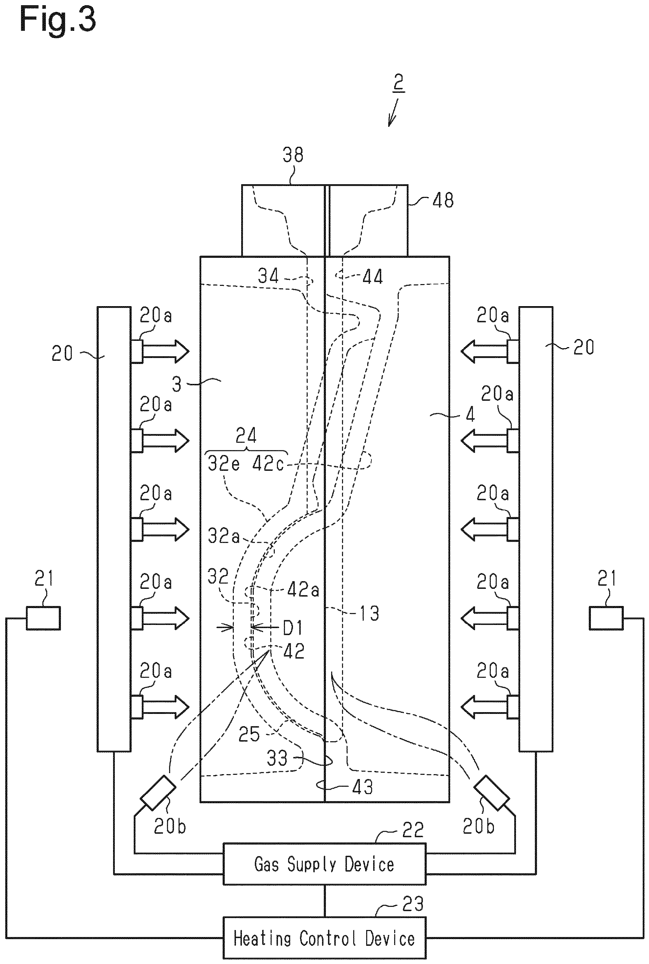

With reference to Fig. 3, when the separating surface 33 of the fixed mold 3 and the separating surface 43 of the movable mold 4 are held in contact with each other, the inner surfaces of cavity surfaces 32, 42 form a cavity 25 shaped in correspondence with the Peking pan P (see Fig. 1).

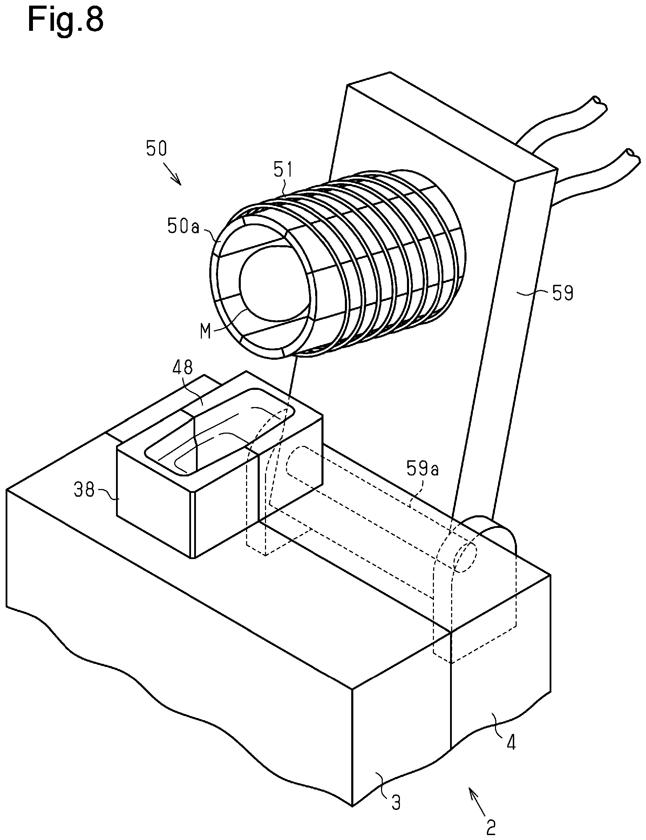

As shown in Figs. 3 and 8, at the time of casting, funnel-shaped molten-metal pouring ports 38, 48 are attached to upper surfaces at positions corresponding to molten-metal ports 34, 44. This configuration facilitates pouring molten metal M into the molten-metal ports 34, 44.

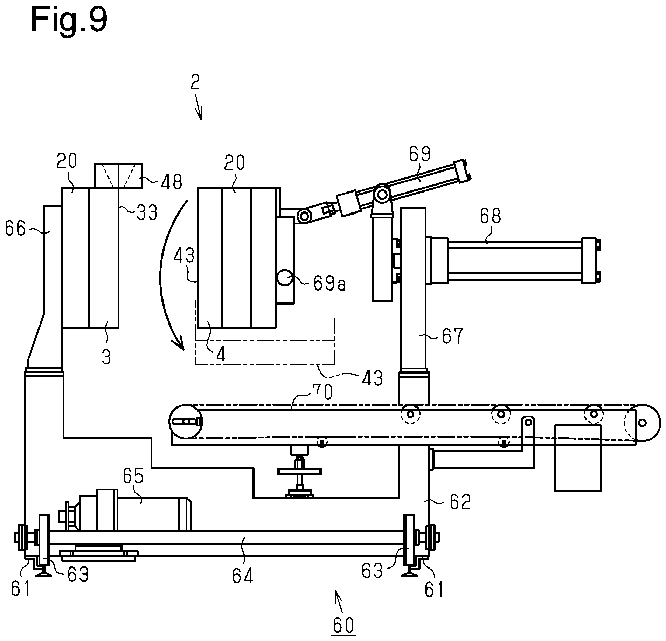

Referring to Fig. 6, the movable mold 4 and the fixed mold 3 are in an open state. In this state, the fixed mold 3 is moved to a predetermined position, as illustrated in Fig. 8, and then fixed. Subsequently, for the pouring of molten metal, the movable mold 4 is brought into contact with the fixed mold 3. The molds 3, 4 are then clamped together and the molten metal is poured into the molds 3, 4. With reference to Figs. 6 and 9, the manufacturing apparatus 1 includes multiple metal-mold support devices 60. Each of the metal-mold support devices 60 supports the corresponding one of the mold sets 2 such that, when removing a product from the molds, the movable mold 4 is separated from the fixed mold 3 to open the mold set 2 and the separating surface 43 of the movable mold 4 is reversed downward to remove the complete Peking pan P downward. This will be later described in detail.

### Heating Device 20 for Molds

As shown in Fig. 3, two heating devices 20 are arranged close to and on opposite sides of each of the mold sets 2.

Each of the heating devices 20 includes a gas burner set. Each mold set 2 has body cavity surfaces 32a, 42a. A fixed-metal-mold heating portion 32e and a movable-metal-mold heating portion 42c are formed on the outer surface of the body cavity surface 32a and the outer surface of the body cavity surface 42a, respectively. Hereinafter, the fixed-metal-mold heating portion 32e and the movable-metal-mold heating portion 42c will be referred to collectively as a "heating portion 24". The gas burner sets of the heating devices 20 heat, with direct flames, the corresponding surfaces of the heating portion 24 in the directions represented by the arrows in Fig. 3.

Each of the gas burner sets includes main burners 20a and a pilot burner 20b. Each of the main burners 20a includes multiple gas nozzles. A heating control device 23 serves as a control section to selectively open and close a non-illustrated valve of each of the gas nozzles. Each gas nozzle thus ejects combustible gas. The combustible gas is supplied by a gas supply device 22. Each of the pilot burners 20b constantly provides a flame for igniting the corresponding ones of the main burners 20a toward the heating portion 24 of the mold set 2. When the main burners 20a are deactivated, the pilot burners 20b heat the mold set 2 to such an extent that the temperature of the mold set 2 gradually decreases. In this manner, a rapid temperature drop of the mold set 2 is made unlikely to occur. By maintaining a certain level of high temperature as has been described, graphite spheroidization is promoted and chilling is limited. Also, a mill scale having a greater thickness is generated.

### Temperature Control on Molds

Radiation thermometers 21 are arranged, each as a temperature measuring section, in the vicinity of the mold set 2 to measure the surface temperatures of the corresponding outer surfaces of the mold set 2. The radiation thermometers 21 remotely measure the surface temperatures of the heating portion 24 of the mold set 2 in correspondence with infrared rays emitted by the mold set 2.

The manufacturing apparatus 1 includes the heating control device 23. The heating control device 23 controls the heating devices 20 depending on the surface temperatures of the mold set 2 measured by the radiation thermometers 21. The heating control device 23 includes a publicly known computer and, according to a program memorized in advance, preheats the mold set 2 to a predetermined temperature at a predetermined timing and then retains the heat.

As has been described, each mold set 2 of the present embodiment includes the heating portion 24. The fixed mold 3 and the movable mold 4 each has a uniform thickness D1, as measured in the direction of the thickness of the cavity surface 32, 42 of the mold 3, 4. Specifically, the heating portion 24 having the thickness D1 is formed in the sections of the cavity surfaces 32, 42 that correspond to the thin plate-like body 11 of the Peking pan P, for example. The thickness D1 is uniformly 20 mm. Other sections of frames 31, 41 have thicknesses of approximately 30 mm. Therefore, if the fixed-metal-mold heating portion 32e and the movable-metal-mold heating portion 42c are uniformly heated, the heat is transmitted to the interior of the mold set 2 uniformly and rapidly from the surfaces of the mold set 2. The heat simultaneously reaches the inner walls of the cavity surfaces 32, 42, thus raising the temperatures of the cavity surfaces 32, 42 uniformly. This makes it unnecessary to perform actual temperature measurement in the interior of the cavity 25. That is, the temperatures of the cavity surfaces 32, 42 are controlled simply by measuring the surface temperatures of the fixed-metal-mold heating portion 32e and the movable-metal-mold heating portion 42c, which correspond to the heating portion 24.

### Material of Molds

Each mold set 2 is made of spheroidal graphite cast iron and thus provides effective heat conduction. Therefore, the temperatures in the interiors of the cavity surfaces 32, 42 are quickly raised by heating the fixed-metal-mold heating portion 32e and the movable-metal-mold heating portion 42c. Also, spheroidal graphite cast iron has a great heat capacity, thus providing a stable heat environment for the molten metal M in the cavity 25. Further, with respect to heating or cooling, spheroidal graphite cast iron thermally expands or contracts to an equal extent with the casting. As a result, the stress acting on the casting at the time of cooling is extremely small. In addition, spheroidal graphite cast iron has a greater tensile strength than not only sand molds but also other metal castings (see JIS G5502). Therefore, even if the thickness of the mold set 2 is small, the mold set 2 is unlikely to be damaged by a great thermal change. Also, since the casting target is a super-thin product, the fact that the absolute value of the dimension change caused by strain is small is advantageous in enabling the mold casting.

### Mold Support Device

As illustrated in Fig. 6, each of the mold support devices 60 supports the associated one of the mold sets 2. Each mold support device 60 is configured to be movable on two rails 61 such that the molten-metal pouring port 48 of the corresponding mold set 2, which the mold support device 60 supports, can be moved to a molten-metal pouring point 56 in the vicinity of a melting furnace 50.

With reference to Fig. 9, the mold support device 60 includes a base 62. The base 62 has an axle 64. The axle 64 includes wheels 63 on opposite ends of the axle 64 to be movable on the rails 61. The axle 64 is driven by a motor 65.

A fixed-metal-mold support portion 66 supports the fixed mold 3 and is arranged on an end of the base 62. The corresponding one of the heating devices 20 is arranged on the backside of the fixed mold 3.

A movable-metal-mold support portion 67 supports the movable mold 4 and is arranged on the opposite end of the base 62. The corresponding one of the heating devices 20 is arranged on the backside of the movable mold 4.

The movable-metal-mold support portion 67 supports the movable mold 4 through a movement mechanism 68. The movable mold 4 is moved to be selectively clamped to and separated from the fixed mold 3. The movable-metal-mold support portion 67 includes a pivot mechanism 69 having a pivot shaft 69a. The pivot shaft 69a is arranged horizontally. The movable-metal-mold support portion 67 is capable of pivoting the movable mold 4 by 90 degrees such that the separating surface 43 faces vertically downward. When the separating surface 43 faces vertically downward, a belt conveyor 70 is located vertically downward from the movable mold 4. After the Peking pan P is removed from the molds and released downward, the belt conveyor 70 receives the Peking pan P and transports the Peking pan P to the site at which the subsequent step takes place.

### Melting Furnace

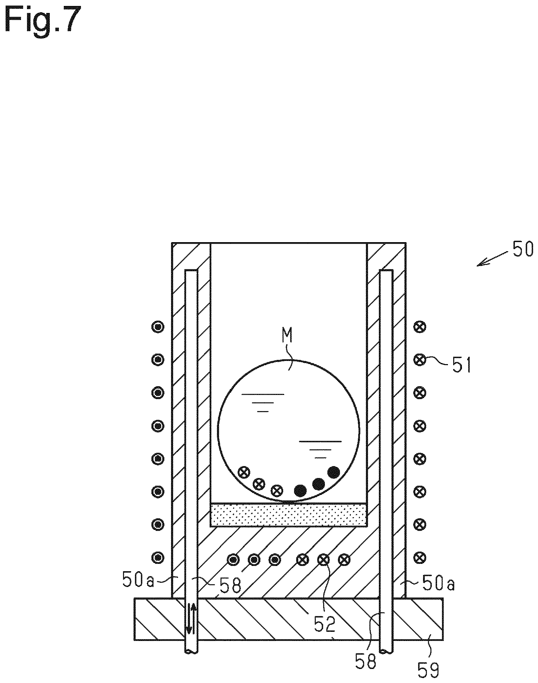

In the present embodiment, the material is melted using a super-small-sized melting furnace 50, as shown in Fig. 7. The melting furnace 50 is a high-frequency induction furnace and includes high-frequency-induction heating coils 51 and levitation coils 52. The melting furnace 50 lifts the material by means of the levitation coils 52 and heats and melts the material using eddy currents from the high-frequency-induction heating coils 51. Cooling pipes 58 are arranged in the interiors of corresponding side walls 50a of the melting furnace 50. Coolant circulates in the cooling pipes 58, thus cooling the side walls 50a.

Referring to Fig. 8, the melting furnace 50 is securely attached to a furnace base 59. The furnace base 59 tilts about a pivot shaft 59a to pour the molten metal M floating in the melting furnace 50 into the molten-metal pouring port 48 of the corresponding one of the mold sets 2 that is located at the molten-metal pouring point 56 (Fig. 6).

As shown in Fig. 6, a power source device 53, a cooling device 54, and a melting-furnace control device 55 are arranged in the vicinity of the melting furnace 50. The power source device 53 supplies electric power to the melting furnace. The cooling device 54 circulates refrigerant in the cooling pipes 58 (Fig. 7). The melting-furnace control device 55 heats the melting furnace 50 and controls the tilting of the furnace base 59 for pouring the molten metal.

### Casting Method Using Molds

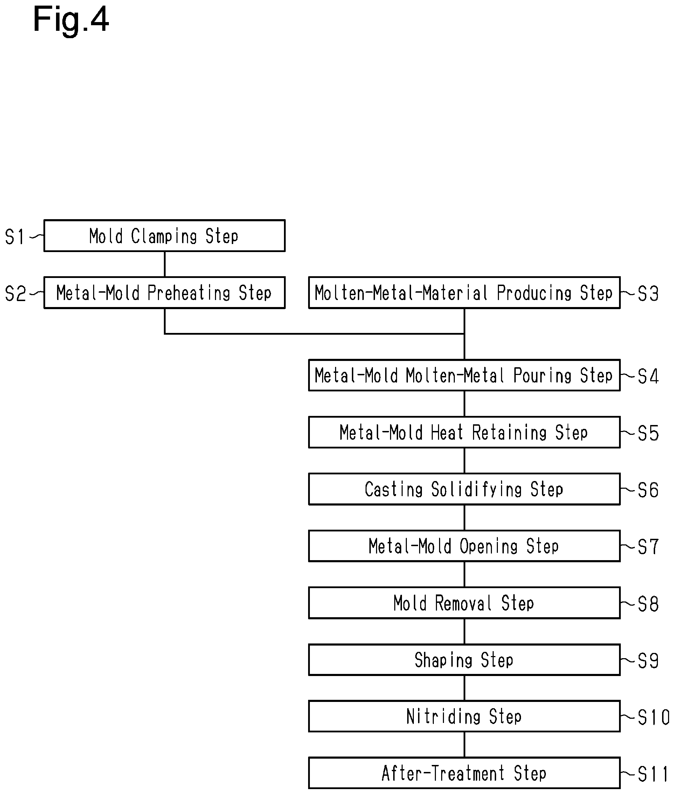

With reference to the flowchart shown in Fig. 4, a method of casting the Peking pan P as a super-thin cast-iron product using the mold set 2, which has the above-described configuration, will now be described.

### Outline of Manufacturing Method

A method of manufacturing the Peking pan P is performed as illustrated in Fig. 4, using the manufacturing apparatus 1, as will be described. First, using the fixed mold 3 and the movable mold 4 of the mold set 2 for the Peking pan P, a mold clamping step (S1) is carried out to clamp the molds 3, 4 with the separating surfaces 33, 43 located between the molds 3, 4. This step is followed by a metal-mold preheating step (S2) in which the heating control device 23 measures the surface temperatures of the heating portion 24 of the mold set 2 by means of the radiation thermometers 21 and the heating devices 20 heat the mold set 2 to a target temperature that is set in advance. Subsequently, in a molten-metal-material producing step (S3), the molten-metal material is melted in advance by the melting furnace 50 (see Figs. 6 and 7). The molten-metal material, which has been melted, is then poured into the heated mold set 2 (see Fig. 8) in a metal-mold molten-metal pouring step (S4). Next, a metal-mold heat-retaining step (S5) is performed to hamper the rapid cooling of the mold set 2, into which the molten metal has been poured. This step is followed by a casting solidifying step (S6) to harden the molten-metal material, which has been poured, while hampering a rapid temperature change in the mold set 2. After the casting is hardened, a metal-mold opening step (S7) is carried out to separate the fixed mold 3 and the movable mold 4 from each other at the separating surfaces 33, 43. Then, a mold removal step (S8) is performed to remove the Peking pan P, which has been cast (see Fig. 9). This step is followed by a shaping step (S9) in which the casting-burr removal from the obtained Peking pan P is mainly performed. After such shaping, the Peking pan P is directly subjected to a nitriding step (S10), and then to an after-treatment step (S11) in which the Peking pan P is provided as a complete product.

Hereinafter, the respective steps will be described in detail.

### Mold Clamping Step (S1)

As shown in Fig. 9, the movable mold 4 is set in the mold support device 60 in advance and supported by the movement mechanism 68 such that the movable mold 4 selectively contacts and separates from the fixed mold 3. In Fig. 9, the movable mold 4 is in an open state. In this state, if necessary, a mold wash is re-applied onto the walls of the cavity in the mold set 2 and dried at 120°c to 200°c.

Then, in the state shown in Fig. 9, the movable mold 4 is moved by the movement mechanism 68 in the upper left direction as viewed in the drawing such that the separating surfaces 33, 43 come into contact with each other. Subsequently, the separating surface 43 is pressed against the separating surface 33 by means of a non-illustrated hydraulic mechanism arranged in the movement mechanism 68. In this manner, the mold clamping step (S1) is performed to clamp the mold set 2, as illustrated in Fig. 3.

### Metal-Mold Preheating Step (S2)

### Metal-Mold Preheating

Next, the metal-mold preheating step (S2) is carried out to heat the mold set 2, which has been clamped, to a target temperature that has been set in advance. As shown in Fig. 3, the two heating devices 20 are arranged in the vicinity of the clamped mold set 2 on the opposite sides of the mold set 2. In the metal-mold preheating step (S2), the heating devices 20 heat the mold set 2 as a whole in the directions represented by the arrows in Fig. 3. It may be desirable, at this stage, to intensely heat a downstream side on which a temperature drop tends to occur in the molten metal M or to focally heat a narrow section in the cavity 25 in which flowability tends to lower. In the present embodiment, however, a uniform target temperature is employed.

### Setting Preheating Temperature

The first goal of the preheating of the mold set 2 is to hamper cementite formation caused by rapid cooling, which hampers graphite spheroidization.

The second goal is to provide improved molten-metal run in the molds. The molds are made of spheroidal graphite cast iron and are super-thin, with the width of the cavity varying from 0.5 to 1.5 mm. Therefore, even without the occurrence of chilling, a lowered flowability directly causes chipping, sink marks, or pinholes. Therefore, to maintain high flowability during molten-metal run, it is necessary to stop the heat absorption from the molten metal by the molds. In this regard, the higher the preheating temperature of the molds, the more effective such preheating.

The third goal is to ensure that the preheating temperature is set such that, even though the preheating of the mold set 2 deforms the molds, the dimension accuracy of the casting is maintained within the acceptable range.

The fourth goal is to maintain the strength and durability of the mold set 2 without being lowered by a change in the structure configurations of the mold set 2 caused by the preheating of the mold set 2.

The fifth goal is to ensure that the preheating temperature is set such that a sufficient mill scale, which is important in the present embodiment, is formed.

The preheating temperature is set to achieve the above-described goals.

To achieve the goals, it is effective to maintain the temperature in the interior of the mold set 2 at a temperature higher than or equal to the A1 transformation point. The A1 transformation point is a temperature at which, for example, when the molten metal M is poured into and thus contacts the mold set 2, cementite formation does not occur and a perlite structure or a ferrite structure is formed. Although the A1 transformation point varies depending on the elements, the A1 transformation point is approximately 727°C typically in spheroidal graphite cast iron.

However, it is difficult to accurately measure the temperature in the interior of the mold set 2. The temperature in the interior of the cavity is thus estimated from the surface temperature of the mold set 2. In the present embodiment, the heating portion 24 employed by the mold set 2 has a uniform small thickness. This enables temperature control from the exterior. That is, the method of the present embodiment employs a temperature that falls in an annealing temperature range, thus providing graphite spheroidization. This limits the deterioration of the molds caused by heating.

### Molten-Metal-Material Producing Step (S3)

While the mold clamping step S1 and the metal-mold preheating step S2 are performed, the molten-metal material (the molten metal M) of spheroidal graphite cast iron is prepared for the metal-mold molten-metal pouring step (S4).

The molten-metal material may be produced in any suitable manner. In the present embodiment, the molten metal M is produced using the melting furnace 50, as shown in Fig. 7.

According to conventional methods, from the view point of molten-metal run, the molten metal M is heated preferably to a temperature higher than or equal to 1400°C, or, more preferably, to a temperature of 1500°C to 1600°C, to improve the flowability of the molten metal M. In the present embodiment, from the view point of preventing fading and chilling, the mold set 2 is heated to such a temperature that the temperature of the molten metal M reaches 1280°C. In this manner, the super-thin Peking pan P is manufactured.

### Metal-Mold Molten-Metal Pouring Step (S4)

After producing the molten-metal material in the above-described manner (S3), the mold set 2, which has been clamped (S1) and preheated (S2), is moved to the molten-metal pouring point 56, as shown in Fig. 6. The melting furnace 50 is then tilted about the pivot shaft 59a by means of the furnace base 59. Subsequently, the molten-metal material (the molten metal M) is poured from the melting furnace 50 directly into the molten-metal port cup that is formed by the molten-metal pouring ports 38, 48.

### Metal-Mold Heat Retaining Step (S5) and Casting Solidifying Step (S6)

Subsequently, the mold set 2, which has been preheated, lowers the temperature of the molten metal M slowly, thus causing graphite deposition. As has been described, the thickness of each mold, into which the molten metal has been poured, is small. The molds thus release heat effectively compared to not only conventional sand molds or shell molds but also thick block-like molds. Therefore, even by natural cooling, solidification is completed substantially within one minute. At the time of such solidification, the preheated mold set 2 and the Peking pan P exhibit equal expansion rates and thus thermally contract in similar manners as the temperature lowers. The mold set 2 is thus unlikely to strain.

After pouring the molten metal, the casting solidifying step (S6) is performed through natural cooling. That is, as the temperature of the molten metal M lowers in the mold set 2, the molten metal M solidifies. In the present embodiment, in addition to this, the mold set 2 is heated as needed by the main burners 20a and the pilot burners 20b of the heating devices 20 following the molten metal pouring, regardless of before or after the casting solidifying step (S6). In this manner, the metal-mold heat-retaining step (S5) is carried out to retain the heat of the mold set 2 to a target temperature that is set in advance.

In the metal-mold heat retaining step, the lowering of the temperature of the molten metal M is controlled to limit the chilling caused by a rapid temperature drop. Therefore, the target temperature is set with this point of view taken into consideration.

The target temperature is set to a temperature unequal to, for example, lower than, the preheating temperature. Specifically, the target temperature is set to provide such a condition that the molten metal M is cooled in a manner providing effective graphite spheroidization.

Also, the target temperature may be lowered gradually as the time elapses following the molten metal pouring to provide such a temperature condition that provides effective graphite spheroidization.

This condition does not necessarily have to be provided through precise temperature control but may be provided by, for example, adjusting the heating time.

In the present embodiment, the preheating temperature is 900°C and the heat is retained at 500°C after the molten metal is poured. The heat retaining in the present embodiment is carried out such that the temperature reaches a value lower than or equal to the A1 transformation point, at which the casting completely solidifies, in one minute or longer and two minutes or shorter. The heat retaining may be ended at this time or continued until a subsequent cycle of molten metal pouring. Continuing the heat retaining in this manner facilitates formation of the mill scale on the surface of the casting.

### Metal-Mold Opening Step (S7)

When the temperature of the casting reaches the A1 transformation point, the structure is fixed and hardened. Afterward, the metal-mold opening step (S7) is carried out by a non-illustrated mold clamping device to open the mold set 2.

### Mold Removal Step (S8)

Subsequently, the mold removal step (S8) is performed. That is, the movable mold 4 is separated from the fixed mold 3 and pivoted with the separating surface 43 facing downward such that the Peking pan P is removed from the molds. If necessary, a knock pin may be arranged in the molds when the Peking pan P is removed from the molds.

### Shaping Step (S9)

Next, the shaping step (S9) is performed. In the present embodiment, the casting-burr removal step is performed after the casting. That is, in a direction parallel to the movement direction of the movable mold 4, the thin cast-iron product is subjected to fusion cutting using a laser beam or the casting burrs formed on the peripheral edge of the thin cast-iron product are struck or grinded using a hammer or a sander. Since the casting time for the Peking pan P in the present embodiment is short, the obtained mill scale (oxide film) is thin. Therefore, the interior of the body 11, as the cooking surface of the Peking pan P, is basically not subjected to any treatment or machining such that the mill scale is maintained in a non-treated or non-machined state.

### Nitriding Step (S10)

After completing the burr removal in the shaping step, the nitriding step (S10) is carried out. The nitriding step (S10) will be later described in detail.

### After-Treatment Step (S11)

In the after-treatment step, the product may be washed and then subjected to decorative finishing by painting or using fat or oil or wax, as needed.

### Nitriding S101 to S107

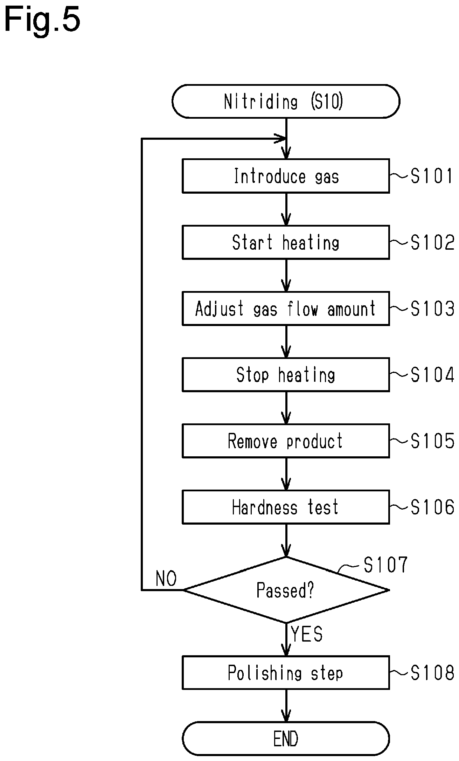

The nitriding step (S10) will hereafter be described in detail with reference to Fig. 5.

In the present disclosure, the term "nitriding" refers to nitriding in a broad sense, unless otherwise specified. That is, the "nitriding" herein represents a generic concept of nitriding and includes not only the nitriding mainly employing nitrogen but also soft nitriding mainly employing nitrogen and carbon, oxynitriding mainly employing nitrogen and oxygen, and sulfonitriding mainly employing nitrogen and sulfur.

The methods of nitriding herein include heating in molten salt, heating in a gas atmosphere, and heating in gas plasma.

In the present embodiment, gas soft nitriding is performed in which heating is carried out in a gas atmosphere mainly containing nitrogen and carbon.

In the gas soft nitriding, a nitriding target is set in a furnace (not shown) and a gas mixture of NH₃, N2, and CO₂ is introduced into the furnace (S101).

Subsequently, heating is started on the gas mixture in this atmosphere to 530°C to 600°C (in the present embodiment, 550°C) (S102), thus nitriding the target using the N element obtained through decomposition of NH₃ and carburizing the target using the C element obtained through decomposition of CO₂. This forms, on the surface of the product, the nitride layer NL (the compound layer L4 and the diffusion hardening layer L3) formed by a nitride with a thickness of approximately 5 to 100 µm. To accomplish such formation of the nitride layer NL, gas-flow-amount adjustment is performed (S103). Specifically, it is desirable that the thickness of the nitride layer be 5 µm or greater, or, particularly, 40 µm or greater. In the present embodiment, the thickness of the nitride layer NL is 40 µm or greater. It is also desirable that the nitride layer contain Si₃N₄.

The heating is stopped after a predetermined time (in the present embodiment, two hours) elapses and the nitriding is completed (S104).

When the temperature drops to a predetermined temperature (in the present embodiment, 150°C) or lower, the furnace is opened to remove the Peking pan P (S105).

All or some of the completed Peking pans P are used as samples and subjected to a hardness test (a HV hardness test) (S106). The hardness test is performed according to "JIS Z 2244 - Vickers Hardness Test Method". The present embodiment employs a micro Vickers test in which the Vickers hardness is measured using a test force of approximately 1 kgf (approximately 9.8N) or less. That is, the test is conducted as a non-destructive inspection, without substantially damaging the products. In the present embodiment, a micro Vickers test is carried out using the automatic indentation measurement and automatic XY stage system ARS900 from FUTURE-TECH Corporation, under a load of 0.01 kgf (approximately 0.098N).

**Table 1**

| Depth ( µm ) | Hardness (HV) | Result |
|---|---|---|
| 0 | 1081 | Passed |
| 10 | 701 | Passed |
| 20 | 561 | Passed |
| 40 | 479 | Passed |
| 60 | 639 | Passed |
| 80 | 611 | Passed |
| 100 | 345 | Failed |
| 120 | 345 | Failed |

According to the test, whether the nitriding step (S101 to S105) has been successful is determined. In the present embodiment, any product is considered to have passed the test if the product exhibits, for example, 400 HV0.01 or greater at the depth of 40 µm. However, depending on the target product, the criteria for passing the test can be varied. Specifically, it is desirable that the Vickers hardness of the surface of the nitride layer be 350 HV0.01 or greater, or, particularly, 500 HV0.01 or greater.

Those of the products that have passed the test (S107: YES) are subjected to a polishing step (S108). The others, which have not shown sufficient hardness, are determined to have failed the test (S107: NO) and subjected to additional nitriding (S102 to S105).

Specifically, correlation is found between the effect of nitriding and the time of nitriding. Therefore, by prolonging the nitriding time of two hours in the present embodiment to approximately eight to ten hours, the nitride layer can be formed to a further depth. In conventional iron frying pans, the nitride layer cannot be formed to a sufficient depth even by prolonging the treatment time. However, in the present embodiment, cast iron is employed. As a result, the nitride layer NL, or, particularly, the diffusion hardening layer L3 formed from Si₃N₄, is formed to a sufficient depth.

Also, soft nitriding is suitable for spheroidal graphite cast iron. This provides nitriding to a greater depth in a shorter treatment time than nitriding on conventional iron products.

In the polishing step (S108), the Peking pan P may be polished using a sander or the outermost surface layer may be removed by lapping such that the Peking pan P is provided as a complete product.

### Operation and Advantages of Embodiment

The Peking pan P of the above-described embodiment operates in the following manner and has the following advantages.
(1) The present embodiment provides a high Vickers hardness compared to a case of cast iron without nitriding. As shown in Table 1, for the depths from 100 to 120 µm, the Vickers hardness is approximately 345 HV0.01. The value corresponds to the Vickers hardness of the spheroidal graphite cast iron of the present embodiment. The hardness of the outermost surface (the depth of 0 µm) obtained through the treatment of the present embodiment is 1081 HV0.01, which is significantly high compared to the spheroidal graphite cast iron. The hardness indicates an extremely high scratch resistance. As a result, a turner or knife that is used for cooking is unlikely to form a scratch on the Peking pan P.
(2) The Vickers hardness becomes gradually lower toward a greater depth until it reaches 479 HV0.01 at the depth of 40 µm. However, at the depths of 60 to 80 µm, the Vickers hardness recovers to as high as 639 to 611 HV0.01. The super-thin Peking pan P made of spheroidal graphite cast iron of the present embodiment exhibits toughness not only on the surface but also in the interior. The Peking pan P is thus hardly deformable despite its super-thinness. The Peking pan P also shows improved anti-fatigue performance.
(3) The present embodiment improves rust resistance. That is, a rust-resistant mill scale (oxide film) is formed below the nitride layer NL, thus hampering rust formation, compared to the conventional techniques having nitride layers only (Japanese Laid-Open Patent Publications No. 2008-154649 and No. 2013-70751). As a result, it is unnecessary to arrange an oxidation layer additionally on the nitride layer, unlike the conventional techniques. This simplifies the manufacturing procedure.
(4) The present embodiment allows for formation of an oil film. Even when spheroidal graphite cast iron is molded in metal mods, thermal contraction forms a slightly uneven skin in the cast iron. Also, the compound layer L4 of the present embodiment is porous and thus readily allows for formation of an oil film when used for cooking. This hampers, in cooking, not only burning but also oil repelling or oil gathering, unlike fluorine resin coated cooking utensils. As a result, uniform food browning is brought about.
(5) The present embodiment maintains a desirable outer appearance. The scratch resistance not only maintains the desirable outer appearance but also hampers surface contamination.
(6) The present embodiment improves heat resistance. Since the nitride layer is highly heat-resistant, the quality of the surface is unlikely to change even after being heated empty. Also, in case burning occurs, the burnt object adhering to the surface can be burned off, by heating the surface empty.
(7) The present embodiment improves anti-corrosion performance. The compound layer L4 in the outermost surface is dense and thus improves the anti-corrosion performance.
(8) The present embodiment, compared to the conventional techniques (Japanese Laid-Open Patent Publications Nos. 2008-154649 and 2013-70751), provides a preferable cooking utensil by a simple manufacturing procedure. In the embodiment, the mill scale, as the oxide film formed on the cast iron obtained by atmosphere casting, is maintained in a non-treated or non-machined state and, in this state, nitriding is performed on the mill scale. This simplifies the manufacturing procedure, compared to the conventional techniques.
(9) Since cast iron originally contains Si by 2% or more, Si₃N₄ is produced in the compound layer L4. Therefore, compared to the conventional techniques (Japanese Laid-Open Patent Publications Nos. 2008-154649 and 2013-70751), the present embodiment provides preferable surface hardening with enhanced hardness.
(10) Particularly, since the present embodiment employs spheroidal graphite cast iron, Si₃N₄ is also produced in the diffusion hardening layer L3, which is located deeper than the compound layer L4. This improves toughness compared to the conventional techniques (Japanese Laid-Open Patent Publications No. 2008-154649 and 2013-70751).
(11) Since cast iron typically contains a high content of C, soft nitriding (N + C) can be provided, simply by carrying out nitriding (N).

The above-described embodiment may be modified as follows.

In the above-described embodiment, after the Peking pan P is removed from the opened molds, the interior of the body 11 as the cooking surface is subjected to nitriding, with the mill scale maintained in a non-treated or non-machined state. However, in order to use the elements of the cast iron, a section or the whole of the mill scale may be removed. In this case, nitriding is carried out on the cementite layer or the base of the cast iron. That is, before nitriding, at least a section of the mill scale may be removed by air blasting, wiping using a brush or cloth, washing with water, washing agent, solvent, or acid, shot blasting, polishing with a sander or grindstone, or lapping.

The above-described removal of the mill scale is performed for purposes including removal of foreign objects from the Peking pan P, removal of a section of the outermost layer and a section of the lower layer below the outermost layer, surface smoothing, and size adjustment.

Through such surface treatment, the thin compound layer of Fe₃C (cementite) with high hardness below the mill scale may be exposed. Nitriding is performed on the surface of the compound layer.

Also, the timing for opening the molds at the time of casting may be delayed to retain the heat such that the mill scale (black rust, Fe₃O₄) is formed with a greater thickness. In this case, nitriding is carried out on the thicker mill scale.

The "cast iron" described in the present disclosure is not restricted to the spheroidal graphite cast iron illustrated in the embodiment. The disclosure may be applied broadly to cast irons formed by atmosphere casting, including white cast iron, gray cast iron (FC: normal cast iron), spheroidal graphite cast iron (FCD), CV cast iron (FCV), white heart malleable cast iron (FCMW), black heart malleable cast iron (FCMB), and perlite malleable cast iron (FCMP).

The cooking utensil of the present disclosure may be, other than the Peking pan P of the embodiment, a frying pan, a cocotte, a skillet, a Japanese omelet pan, a cooking iron plate, a pot, a hot plate, an octopus ball pan, a Japanese fishshaped cake maker, a pan for baking Japanese round-shaped cakes containing readbean paste, a hot sandwich maker, a sukiyaki pan, an iron kettle, or a rice cooker. That is, the present disclosure mainly targets alternatives for the cooking utensils that cause burning on the cooking surface and thus require fluorite resin coating. The disclosure is also applicable to a grill grid or grid.

The present disclosure is applicable to not only a super-thin cast-iron product with a thickness of approximately 1.4 mm, as in the embodiment, but also a Dutch oven or cooking iron plate having a greater thickness.

The molds are not restricted to the molds of the embodiment. That is, the casting may be performed using sand molds or shell molds. Such casing with sand molds or shell molds may be employed as long as the cooking surface does not need sander polishing and the casting can be provided as a complete product without polishing, even if the cooking surface is slightly uneven depending on the purpose.

## Claims

1. A method of manufacturing a cooking utensil comprising:
forming a cooking utensil made of a cast iron by casting, wherein an oxide film (L2) is formed on the cooking surface of the cooking utensil made of the cast iron; and
performing a nitriding on a cooking surface of the cooking utensil made of the cast iron, thereby forming a nitride layer (NL) on the oxide film (L2) so that the oxide film (L2) is located between the cooking utensil made of the cast iron and the nitride layer.

2. The method of manufacturing a cooking utensil according to claim 1, wherein the oxide film (L2) is a mill scale (chemical formula: Fe₃O₄).

3. The method of manufacturing a cooking utensil according to claim 1 or 2, comprising removing a section of the oxide film (L2) prior to the nitriding.

4. The method of manufacturing a cooking utensil according to any one of claims 1 to 3, wherein the casting is a casting using a mold.

5. The method of manufacturing a cooking utensil according to any one of claims 1 to 4, wherein the casting is an atmosphere casting.

6. The method of manufacturing a cooking utensil according to any one of claims 1 to 5, wherein the cast iron is either a spheroidal graphite cast iron or a gray cast iron.

7. The method of manufacturing a cooking utensil according to any one of claims 1 to 6, wherein the nitriding is carried out in a gas atmosphere.

8. The method of manufacturing a cooking utensil according to any one of claims 1 to 7, wherein the nitriding is a soft nitriding.

9. The method of manufacturing a cooking utensil according to any one of claims 1 to 8, wherein the nitriding is performed such that a thickness of the nitride layer (NL) becomes 5 µm or greater.

10. The method of manufacturing a cooking utensil according to any one of claims 1 to 9, wherein the nitriding is performed such that the nitride layer (NL) contains Si₃N₄.

11. The method of manufacturing a cooking utensil according to any one of claims 1 to 10, wherein the nitriding is performed such that a Vickers hardness of a surface of the nitride layer (NL) becomes 400 HV0.01 or greater.

12. The method of manufacturing a cooking utensil according to any one of claims 1 to 11, wherein the cooking utensil is one of a Chinese pan, a frying pan, a Japanese omelet pan, a cooking iron plate, a grill, a cocotte, a skillet, a Dutch oven, and a pot.

13. A cooking utensil comprising:
a cooking utensil made of a cast iron that is formed by a casting, an oxide film (L2) that is formed on the cooking surface of the cooking utensil made of the cast; and
a nitride layer (NL) that is formed on the oxide film (L2) on the cooking surface of the cooking utensil made of the cast iron so that the oxide film (L2) is located between the cooking utensil made of the cast iron and the nitride layer (NL).

14. The cooking utensil according to claim 13, wherein the oxide film (L2) is a mill scale (chemical formula: Fe₃O₄).

15. The cooking utensil according to any one of claims 13 or 14, wherein the cast iron is either a spheroidal graphite cast iron or a gray cast iron.

16. The cooking utensil according to any one of claims 13 to 15, wherein a thickness of the nitride layer (NL) is 5 µm or greater.

17. The cooking utensil according to any one of claims 13 to 16, wherein the nitride layer (NL) contains Si₃N₄.

18. The cooking utensil according to any one of claims 13 to 17, wherein Vickers hardness of a surface of the nitride layer (NL) is 400 HV0.01 or greater.

19. The cooking utensil according to any one of claims 13 to 18, wherein the cooking utensil is one of a Chinese pan, a frying pan, a Japanese omelet pan, a cooking iron plate, a grill, a cocotte, a skillet, a Dutch oven, and a pot.

## Patentansprüche

1. Verfahren zur Herstellung eines Kochgeschirrs, das aufweist:
Bilden eines Kochgeschirrs aus Gusseisen durch Gießen, wobei ein Oxidfilm (L2) auf der Kochoberfläche des Kochgeschirrs aus Gusseisen gebildet wird; und
Durchführen eines Nitrierens auf einer Kochoberfläche des Kochgeschirrs aus Gusseisen, wodurch eine Nitridschicht (NL) auf dem Oxidfilm (L2) gebildet wird, so dass der Oxidfilm (L2) zwischen dem Kochgeschirr aus Gusseisen und der Nitridschicht angeordnet ist.

2. Verfahren zur Herstellung eines Kochgeschirrs nach Anspruch 1, wobei der Oxidfilm (L2) ein Walzzunder (chemische Formel: Fe₃O₄) ist.

3. Verfahren zur Herstellung eines Kochgeschirrs nach Anspruch 1 oder 2, das das Entfernen eines Abschnitts des Oxidfilms (L2) vor dem Nitrieren aufweist.

4. Verfahren zur Herstellung eines Kochgeschirrs nach einem der Ansprüche 1 bis 3, wobei das Gießen ein Gießen unter Verwendung einer Form ist.

5. Verfahren zur Herstellung eines Kochgeschirrs nach einem der Ansprüche 1 bis 4, bei dem das Gießen ein Atmosphärengießen ist.

6. Verfahren zur Herstellung eines Kochgeschirrs nach einem der Ansprüche 1 bis 5, wobei das Gusseisen entweder ein Sphäroguss oder ein Grauguss ist.

7. Verfahren zur Herstellung eines Kochgeschirrs nach einem der Ansprüche 1 bis 6, wobei das Nitrieren in einer Gasatmosphäre durchgeführt wird.

8. Verfahren zur Herstellung eines Kochgeschirrs nach einem der Ansprüche 1 bis 7, wobei das Nitrieren ein Weichnitrieren ist.

9. Verfahren zur Herstellung eines Kochgeschirrs nach einem der Ansprüche 1 bis 8, wobei das Nitrieren so durchgeführt wird, dass eine Dicke der Nitridschicht (NL) 5 µm oder mehr wird.

10. Verfahren zur Herstellung eines Kochgeschirrs nach einem der Ansprüche 1 bis 9, wobei das Nitrieren so durchgeführt wird, dass die Nitridschicht (NL) Si₃N₄ enthält.

11. Verfahren zur Herstellung eines Kochgeschirrs nach einem der Ansprüche 1 bis 10, wobei das Nitrieren so durchgeführt wird, dass eine Vickershärte einer Oberfläche der Nitridschicht (NL) 400 HV0,01 oder mehr wird.

12. Verfahren zur Herstellung eines Kochgeschirrs nach einem der Ansprüche 1 bis 11, wobei das Kochgeschirr eines von einer chinesischen Pfanne, einer Bratpfanne, einer japanischen Omelettpfanne, einer Kocheisenplatte, einem Grill, einer Cocotte, einem Tiegel, einem Feuertopf und einem Topf ist.

13. Kochgeschirr, das aufweist:
ein Kochgeschirr aus Gusseisen, das durch Gießen gebildet ist, einen Oxidfilm (L2), der auf der Kochoberfläche des Kochgeschirrs aus Gusseisen gebildet ist, und
eine Nitridschicht (NL), die auf dem Oxidfilm (L2) auf der Kochoberfläche des Kochgeschirrs aus Gusseisen gebildet ist, so dass der Oxidfilm (L2) zwischen dem Kochgeschirr aus Gusseisen und der Nitridschicht (NL) angeordnet ist.

14. Kochgeschirr nach Anspruch 13, wobei die Oxidschicht (L2) ein Walzzunder (chemische Formel: Fe₃O₄) ist.

15. Kochgeschirr nach einem der Ansprüche 13 oder 14, wobei das Gusseisen entweder ein Sphäroguss oder ein Grauguss ist.

16. Kochgeschirr nach einem der Ansprüche 13 bis 15, wobei die Dicke der Nitridschicht (NL) 5 µm oder mehr beträgt.

17. Das Kochgeschirr nach einem der Ansprüche 13 bis 16, wobei die Nitridschicht (NL) Si₃N₄ enthält.

18. Kochgeschirr nach einem der Ansprüche 13 bis 17, wobei die Vickershärte einer Oberfläche der Nitridschicht (NL) 400 HV0,01 oder mehr beträgt.

19. Kochgeschirr nach einem der Ansprüche 13 bis 18, wobei wobei das Kochgeschirr eines von einer chinesischen Pfanne, einer Bratpfanne, einer japanischen Omelettpfanne, einer Kocheisenplatte, einem Grill, einer Cocotte, einem Tiegel, einem Feuertopf und einem Topf ist.

## Revendications

1. Procédé de fabrication d'un ustensile de cuisson consistant à :
- réaliser un ustensile de cuisson en fonte par coulée en formant un film d'oxyde (L2) sur la surface de cuisson de l'ustensile de cuisson réalisé en fonte, et
- effectuer une nitruration de la surface de cuisson de l'ustensile de cuisson en fonte, en formant une couche de nitrure (NL) sur le film d'oxyde (L2) de façon que le film d'oxyde (L2) se trouve entre l'ustensile de cuisson en fonte et la couche de nitrure.

2. Procédé de fabrication d'un ustensile de cuisson selon la revendication 1,
selon lequel
le film d'oxyde (L2) en scories (formule chimique tétroxyde de trifer (Fe₃O₄)).

3. Procédé de fabrication d'un ustensile de cuisson selon la revendication 1 ou 2, consistant à enlever une partie du film d'oxyde (L2) avant la nitruration.

4. Procédé de fabrication d'un ustensile de cuisson selon l'une des revendications 1 à 3, selon lequel
la coulée se fait avec de la fonte dans un moule.

5. Procédé de fabrication d'un ustensile de cuisson selon l'une quelconque des revendications 1 à 3,
selon lequel
la fonte se fait par une coulée à l'atmosphère.

6. Procédé de fabrication d'un ustensile de cuisson selon l'une des revendications 1 à 5, selon lequel
la fonte est de la fonte à graphite sphéroïdal ou de la fonte grise.

7. Procédé de fabrication d'un ustensile de cuisson selon l'une des revendications 1 à 6, selon lequel
la nitruration se fait dans une atmosphère de gaz.

8. Procédé de fabrication d'un ustensile de cuisson selon l'une des revendications 1 à 7, selon lequel
la nitruration est une nitruration douce.

9. Procédé de fabrication d'un ustensile de cuisson selon l'une des revendications 1 à 8, selon lequel
la nitruration se fait pour avoir une épaisseur de couche de nitrure (NL) égale à 5 µm ou plus.

10. Procédé de fabrication d'un ustensile de cuisson selon l'une des revendications 1 à 9,
selon lequel
la nitruration se fait pour que la couche de nitrure (NL) contienne Si₃N₄.

11. Procédé de fabrication d'un ustensile de cuisson selon l'une des revendications 1 à 10,
selon lequel
la nitruration se fait pour avoir une dureté Vickers de la surface de la couche de nitrure (NL) qui soit égale ou supérieure à 400 HV0,01.

12. Procédé de fabrication d'un ustensile de cuisson selon l'une des revendications 1 à 11,
selon lequel
l'ustensile de cuisson est une poêle chinoise, une poêle à frire, une poêle à omelette japonaise, une plaque de fonte de cuisson, un gril, une cocotte, et une marmite.

13. Ustensile de cuisson comprenant :
- un ustensile de cuisson en fonte obtenu par coulée, en formant un film d'oxyde (L2) sur la surface de cuisson de l'ustensile de cuisson en fonte, et
- une couche de nitrure (NL) formée sur le film d'oxyde (L2) sur la surface de cuisson de l'ustensile de cuisson en fonte pour que le film d'oxyde (L2) se trouve entre l'ustensile de cuisson en fonte et la couche de nitrure (NL).

14. Ustensile de cuisson selon la revendication 13,
selon lequel
le film d'oxyde (L2) est en scorie (formule chimique tétroxyde de trifer (Fe₃O₄)).

15. Ustensile de cuisson selon l'une des revendications 13 ou 14,
selon lequel
la fonte soit de la fonte à graphite sphéroïdale ou de la fonte grise.

16. Ustensile de cuisson selon l'une des revendications 13 à 15,
selon lequel
l'épaisseur de la couche de nitrure (NL) est égale ou supérieure à 5 µm.

17. Ustensile de cuisson selon l'une des revendications 13 à 16,
selon lequel
la couche de nitrure (NL) contient Si₃N₄.

18. Ustensile de cuisson selon l'une des revendications 13 à 17,
selon lequel
la dureté Vickers de la surface de la couche de nitrure (NL) est égale ou supérieure à 400 HV0.01.

19. Ustensile de cuisson selon l'une des revendications 13 à 18,
selon lequel
l'ustensile de cuisson est une poêle chinoise, une poêle à frire, une poêle à omelette japonaise, une plaque de fonte de cuisson, un gril, une cocotte, et une marmite.
